# EUROPEAN PATENT APPLICATION

(11) **EP 4 749 154 A1**
(43) Date of publication of application: **27.05.2026**
(21) Application number: 24853465.3
(22) Date of filing: 16.07.2024
(51) Int. Cl.: F16D 65/092, F16D 65/18

(54) **CALIPER BODY-BIASED ELECTRO-MECHANICAL BRAKE, SYSTEM, AND VEHICLE**

(30) Priority: 14.08.2023 CN 202311021930
(71) Applicant: Huawei Digital Power Technologies Co., Ltd., Shenzhen, Guangdong 518043 (CN)
(72) Inventor: LUO, Yuehao, Shenzhen, Guangdong 518043 (CN); HE, Yuhui, Shenzhen, Guangdong 518043 (CN); NI, Hui, Shenzhen, Guangdong 518043 (CN)
(74) Representative: Maiwald GmbH
(86) International application number: PCT/CN2024/105677
(87) International publication number: WO 2025/036053

(57) **Abstract**

This application provides an electro-mechanical brake apparatus and system with a biased caliper body, and a vehicle. The electro-mechanical brake apparatus includes a caliper body, a reducer, and a friction pad. The caliper body is configured to connect a caliper rack and the reducer. The reducer is configured to drive, through a plurality of transmission members, the friction pad to shift. The caliper body includes an avoidance hole and two slide pin accommodating holes. The avoidance hole is configured to avoid one transmission member between the reducer and the friction pad. The two slide pin accommodating holes are separately configured to accommodate one slide pin of the caliper rack. In an axial direction of the slide pin accommodating hole, the reducer and the friction pad are oppositely arranged, an extension direction of the slide pin accommodating hole faces the reducer, and an opening direction of the slide pin accommodating hole is away from the reducer. In the electro-mechanical brake apparatus in this application, the opening direction of the slide pin accommodating hole for accommodating the slide pin in the caliper body is changed to match a gravity center shift of the electro-mechanical brake apparatus, and improve a force condition of the slide pin, so as to reduce friction force and improve braking efficiency.

## Description

### CROSS-REFERENCE TO RELATED APPLICATIONS

This application claims priority to Chinese Patent Application No. 202311021930.0, filed with the China National Intellectual Property Administration on August 14, 2023 and entitled "ELECTRO-MECHANICAL BRAKE APPARATUS AND SYSTEM WITH BIASED CALIPER BODY, AND VEHICLE", which is incorporated herein by reference in its entirety.

### TECHNICAL FIELD

This application relates to the field of vehicle technologies, and in particular, to an electro-mechanical brake apparatus and system with a biased caliper body and a vehicle.

### BACKGROUND

An electro-mechanical brake (electro-mechanical brake, EMB) apparatus uses a motor and a mechanical transmission mechanism in combination, to drive a brake for braking. The electro-mechanical brake apparatus has features such as a simple structure, sensitive response, stable payload transfer, and no need for hydraulic pipes, and has high transfer efficiency. The electro-mechanical brake apparatus can improve safety, maneuverability, and comfort of a vehicle.

Due to a limitation of wheel end space of the vehicle, components including a brake motor and a reducer that are mounted on the electro-mechanical brake apparatus need to be arranged in an axial direction of a brake disc, which correspondingly increases a size of the electro-mechanical brake apparatus in this direction, and causes a gravity center of the electro-mechanical brake apparatus to shift. Large eccentric torque is applied to a slide pin for guiding in the electro-mechanical brake apparatus, which increases friction force and reduces braking efficiency.

### SUMMARY

This application provides an electro-mechanical brake apparatus with a biased caliper body, an electro-mechanical brake system, and a vehicle. An opening direction of a slide pin accommodating hole for accommodating a slide pin in the caliper body is changed to match a gravity center shift of the electro-mechanical brake apparatus, and improve a force condition of the slide pin, so as to reduce friction force and improve braking efficiency. This application specifically includes the following solutions.

According to a first aspect, this application provides an electro-mechanical brake apparatus with a biased caliper body. The electro-mechanical brake apparatus includes a caliper body, a reducer, and a friction pad. The caliper body is configured to connect a caliper rack and the reducer. The reducer is configured to drive, through a plurality of transmission members, the friction pad to shift. The caliper body includes an avoidance hole and two slide pin accommodating holes. The avoidance hole is configured to avoid one transmission member between the reducer and the friction pad. The two slide pin accommodating holes are separately configured to accommodate one slide pin of the caliper rack.

In an axial direction of the slide pin accommodating hole, the reducer and the friction pad are oppositely arranged, an extension direction of the slide pin accommodating hole faces the reducer, and an opening direction of the slide pin accommodating hole is away from the reducer.

In this application, the reducer of the electro-mechanical brake apparatus is fastened to the caliper body, and drive, through the plurality of transmission members, the friction pad to shift to brake a wheel. The caliper body is slidably connected to the caliper rack through the slide pin, and the opening direction of the slide pin accommodating hole of the caliper body for accommodating the slide pin is away from the reducer. In this way, an extension direction of the slide pin in the caliper body is a direction toward the reducer. Because most of volumes of the caliper body and the plurality of transmission members are located on a side close to the reducer, in a process in which the caliper body slides relative to the caliper rack, a gravity center of the electro-mechanical brake apparatus is always within a length range of the slide pin or close to the slide pin. In this way, in this application, the electro-mechanical brake apparatus reduces eccentric torque applied to the slide pin in a braking process, to mitigate force applied to the slide pin, thereby reducing friction force, and improving braking efficiency of the electro-mechanical brake apparatus.

In an implementation, the caliper body includes two connection holes. The two connection holes are configured to fasten the reducer, and a direction in which the two connection holes are oppositely arranged intersects that for the two slide pin accommodating holes.

In a radial direction of the slide pin accommodating hole, the two connection holes are respectively arranged on two sides of the avoidance hole, and the two slide pin accommodating holes are respectively arranged on two sides of the avoidance hole.

In the axial direction of the slide pin accommodating hole, opening directions of the two connection holes face the reducer.

In this implementation, in the axial direction of the slide pin accommodating hole, the opening direction of the connection hole is opposite to the opening direction of the slide pin accommodating hole, and the caliper rack and the reducer are respectively arranged on two sides of the caliper body, to ensure small flip torque applied to the slide pin. An arrangement direction of the connection holes intersects an arrangement direction of the slide pin accommodating holes, to reduce a size of the caliper body in the axial direction of the slide pin accommodating hole.

In an implementation, the direction in which the two connection holes are oppositely arranged is perpendicular to that for the two slide pin accommodating holes; or
distances between an axis of the avoidance hole and axes of the two slide pin accommodating holes are equal.

In this implementation, the arrangement direction of the connection holes is perpendicular to the arrangement direction of the slide pin accommodating holes, which is conducive to installation of the slide pin and the reducer, and can improve structural stability of the caliper body. The two slide pin accommodating holes are symmetrically distributed on two sides of the avoidance hole, so that cooperation between the caliper body and two slide pins is balanced, thereby reducing the flip torque between the two slide pins.

In an implementation, the caliper body includes an accommodating portion. The accommodating portion is located between the reducer and the friction pad in the axial direction of the slide pin accommodating hole. The avoidance hole is disposed in the accommodating portion, and several transmission members are accommodated in the accommodating portion. The reducer is in transmission connection to the several transmission members through the one transmission member, and the several transmission members are configured to: be driven by the reducer, and push the friction pad to slide in a direction away from the reducer to brake the wheel.

In this implementation, the caliper body fastens the reducer by using the accommodating portion, and accommodates the several transmission members by using the accommodating portion, so that the reducer is in transmission connection to the several transmission members to drive the friction pad to slide toward the brake disc.

In an implementation, the electro-mechanical brake apparatus includes a brake motor, and the brake motor is in transmission connection to the reducer to provide brake force for braking the wheel.

In the axial direction of the slide pin accommodating hole, the brake motor is located between the reducer and the friction pad.

In a radial direction of the slide pin accommodating hole, the brake motor and the several transmission members are adjacently arranged.

In this implementation, the brake motor, the reducer, and the plurality of transmission members in the electro-mechanical brake apparatus are arranged in a "U" shape, thereby shortening a length of a transmission line of output power of the brake motor, downsizing the electro-mechanical brake apparatus in an axial direction of the wheel, and reasonably utilizing wheel end space.

In an implementation, the caliper body includes a pushing portion. In the axial direction of the slide pin accommodating hole, the pushing portion is located on a side that is of the friction pad and that is away from the reducer. The caliper body is configured to: be driven by the reducer and slide relative to a vehicle frame. The pushing portion drives the friction pad to slide toward the reducer to brake the wheel.

In this implementation, the caliper body fastens the friction pad through the pushing portion. In a process in which the pushing portion slides with the caliper body, the pushing portion pushes the friction pad to slide toward the side of the reducer to brake the wheel.

According to a second aspect, this application provides an electro-mechanical brake system. The electro-mechanical brake system includes a caliper rack, a slide pin, and the electro-mechanical brake apparatus according to any one of the foregoing implementations. The caliper rack is fastened to a vehicle frame. One end of the slide pin is fastened to the caliper rack, and the other end extends into a slide pin accommodating hole of a caliper body in the electro-mechanical brake apparatus.

The caliper rack of the electro-mechanical brake system provided in this application is fastened between the vehicle frame and the slide pin, and the electro-mechanical brake apparatus implements slidable connection to the vehicle frame through the slide pin. In a process of sliding relative to the slide pin, a gravity center of the electro-mechanical brake apparatus is always within a length range of the slide pin or close to the slide pin, thereby mitigating the force applied to the slide pin, and improving braking efficiency of the electro-mechanical brake system.

In an implementation, the electro-mechanical brake system includes a fastening bolt. The caliper rack includes a mounting ear. The fastening bolt and the slide pin are respectively arranged on two sides of the mounting ear in an axial direction of the slide pin, and the fastening bolt passes through the mounting ear and is fastened to an end portion of the slide pin.

In this implementation, the end of the slide pin close to the caliper rack is fastened by using the fastening bolt, so that the end of the slide pin is fastened to the caliper rack and the other end extends in a direction toward a reducer.

In an implementation, the slide pin includes a primary slide pin and a secondary slide pin, and the caliper body includes a primary slide pin accommodating hole and a secondary slide pin accommodating hole.

In a radial direction of the primary slide pin, a first spacing exists between the primary slide pin and the primary slide pin accommodating hole.

In a radial direction of the secondary slide pin, a second spacing exists between the secondary slide pin and the secondary slide pin accommodating hole, and the second spacing is greater than the first spacing.

In this implementation, different spacings are configured between the two slide pins and the slide pin accommodating holes corresponding to the caliper body, so that the two slide pins can be controlled to have different occasions of overall collision with the caliper body in a braking process, to form a buffer for flip impact of the caliper body on the caliper rack, thereby improving an internal force condition of the electro-mechanical brake system and prolonging a service life.

In an implementation, the electro-mechanical brake system includes a buffer sleeve, and the buffer sleeve is sleeved on the secondary slide pin and inserted into the secondary slide pin accommodating hole.

An outer circumferential surface of the buffer sleeve is attached to an inner circumferential surface of the secondary slide pin accommodating hole; or
in the radial direction of the secondary slide pin, a third spacing exists between the buffer sleeve and the secondary slide pin accommodating hole, and the third spacing is smaller than the first spacing.

In this implementation, the spacing between the buffer sleeve sleeved on the secondary slide pin and the secondary slide pin accommodating hole is smaller than the spacing between the primary slide pin and the primary slide pin accommodating hole, and an occasion of collision between the buffer sleeve and the secondary slide pin accommodating hole is earlier than an occasion of collision between the primary slide pin and the primary slide pin accommodating hole. The buffer sleeve may form buffer effect for the primary slide pin, and the primary slide pin forms buffer effect for the secondary slide pin. The electro-mechanical brake apparatus forms a two-stage buffer in the braking process to further improve the internal force condition and prolong the service life.

In an implementation, at least one positioning section is concavely disposed on an outer circumferential surface of the secondary slide pin, a periphery of each positioning section is sleeved with one buffer sleeve, and in the radial direction of the secondary slide pin, a sum of a thickness of the buffer sleeve and a radius of the positioning section is greater than a radius of the outer circumferential surface of the secondary slide pin.

In this implementation, in a length direction of the secondary slide pin, two opposite end faces of the positioning section may hold the buffer sleeve; in the radial direction of the secondary slide pin, the outer circumferential surface of the buffer sleeve protrudes from the outer circumferential surface of the secondary slide pin, and the secondary slide pin accommodating hole first contacts the buffer sleeve and then contacts the secondary slide pin to form the buffer effect for the secondary slide pin.

In an implementation, in the length direction of the secondary slide pin, a plurality of positioning sections are spaced from each other on the outer circumferential surface of the secondary slide pin.

In this implementation, there are a plurality of buffer sleeves. The plurality of buffer sleeves are spaced from each other in the length direction of the secondary slide pin, and a larger contact span between the buffer sleeve and the secondary slide pin accommodating hole indicates better buffer effect. Correspondingly, sections other than the positioning sections of the secondary slide pin are also spaced from each other in the length direction of the secondary slide pin, and larger contact span between the secondary slide pin and the secondary slide pin accommodating hole also improves the force condition when the secondary slide pin collides with the secondary slide pin accommodating hole.

In an implementation, the outer circumferential surface of the buffer sleeve is provided with a plurality of grooves, the plurality of grooves are spaced from each other in a circumferential direction of the buffer sleeve, and the plurality of grooves are configured to provide expansion space for the buffer sleeve when the buffer sleeve is squeezed.

In a radial direction of the buffer sleeve, a smallest diameter of all the grooves is greater than an inner diameter of the buffer sleeve.

In an axial direction of the buffer sleeve, each groove runs through the buffer sleeve.

In this implementation, the plurality of grooves are distributed on the outer circumferential surface of the buffer sleeve in the circumferential direction, so that when the buffer sleeve collides with the secondary slide pin accommodating hole, deformation of the buffer sleeve is accommodated by the grooves, to prevent the buffer sleeve from cracking due to excessively high internal stress under large impact.

In an implementation, the primary slide pin includes a plurality of air-eliminating grooves, the plurality of air-eliminating grooves are spaced from each other in a circumferential direction of the primary slide pin, and each air-eliminating groove extends in an axial direction of the primary slide pin to enable an inside of the primary slide pin accommodating hole to communicate with an outside.

In the axial direction of the primary slide pin, a length of the air-eliminating groove is less than a length of the primary slide pin.

In this implementation, the spacing between the primary slide pin and the primary slide pin accommodating hole is small, and a structure of the air-eliminating groove can balance air pressure inside and outside the primary slide pin accommodating hole, to avoid forming large air pressure in the primary slide pin accommodating hole, which affects further sliding shift of the primary slide pin.

In an implementation, the electro-mechanical brake apparatus includes a sealing sleeve. The sealing sleeve is sleeved on the slide pin, and is located between the caliper body and the caliper rack in a length direction of the slide pin. The sealing sleeve is fastened to the caliper body and is configured to seal and protect the slide pin accommodating hole of the caliper body.

In this implementation, the sealing sleeve is disposed on the caliper body to shield an opening of the slide pin accommodating hole. When the slide pin slides in the slide pin accommodating hole, the sealing sleeve can cooperate with the slide pin to maintain relative sealing in the slide pin accommodating hole, thereby forming protection effect for the inside of the slide pin accommodating hole.

In an implementation, the electro-mechanical brake apparatus includes two friction pads. The two friction pads are respectively arranged on two sides of a brake disc in a length direction of the slide pin. The reducer is configured to push, through a plurality of transmission members, an adjacent friction pad to slide toward the brake disc, and is further configured to push the caliper body to drive the other friction pad to slide toward the brake disc.

In this implementation, the reducer may form, based on pushing force generated by the plurality of transmission members, pushing force pushing a friction pad to slide and pushing force pushing the caliper body to reversely slide in the length direction of the slide pin, to simultaneously drive the two friction pads to be close to each other to brake the brake disc.

According to a third aspect, this application provides a vehicle. The vehicle includes a wheel and the electro-mechanical brake system provided in any one of the foregoing implementations, where a length direction of a slide pin in the electro-mechanical brake system is parallel to a rotation axial direction of a brake disc of the wheel.

The vehicle provided in the third aspect of this application is braked by the electro-mechanical brake system provided in the second aspect of this application. The electro-mechanical brake system provided in the second aspect of this application reduces eccentric torque applied to the slide pin in a braking process, thereby reducing friction force inside the electro-mechanical brake system, to improve braking efficiency of the vehicle in this application.

### BRIEF DESCRIPTION OF DRAWINGS

FIG. 1 is a diagram of an operating scenario of an electro-mechanical brake system according to an embodiment of this application;
FIG. 2 is a diagram of an outline structure of an electro-mechanical brake system according to an embodiment of this application;
FIG. 3 is a diagram of a cross-sectional structure of an electro-mechanical brake system according to an embodiment of this application;
FIG. 4 is a diagram of an outline structure of an electro-mechanical brake system according to an embodiment of this application;
FIG. 5 is a diagram of an outline structure of another side of an electro-mechanical brake system according to an embodiment of this application;
FIG. 6 is a diagram of a structure of an electro-mechanical brake system in which a part of a structure is hidden according to an embodiment of this application;
FIG. 7 is a diagram of a structure of a caliper rack of an electro-mechanical brake system according to an embodiment of this application;
FIG. 8 is a diagram of a structure of an electro-mechanical brake system in which a part of a structure is hidden according to an embodiment of this application;
FIG. 9 is an exploded diagram of a partial structure of the electro-mechanical brake system according to the embodiment shown in FIG. 8 of this application;
FIG. 10 is a diagram of a partial cross-sectional structure of an electro-mechanical brake system according to an embodiment of this application;
FIG. 11 is a diagram of a partial cross-sectional structure of an electro-mechanical brake system according to an embodiment of this application;
FIG. 12 is a diagram of an enlarged partial cross-sectional structure at a position A of the electro-mechanical brake system according to the embodiment shown in FIG. 10 of this application;
FIG. 13 is a diagram of an enlarged partial cross-sectional structure at a position B of the electro-mechanical brake system according to the embodiment shown in FIG. 11 of this application;
FIG. 14 is a diagram of an enlarged partial cross-sectional structure of the electro-mechanical brake system according to the embodiment shown in FIG. 11 of this application;
FIG. 15 is a diagram of an enlarged partial cross-sectional structure of the electro-mechanical brake system according to the embodiment shown in FIG. 11 of this application;
FIG. 16 is a diagram of an outline structure of a secondary slide pin in an electro-mechanical brake system according to an embodiment of this application;
FIG. 17 is a diagram of an outline structure of a buffer sleeve in an electro-mechanical brake system according to an embodiment of this application;
FIG. 18 is a diagram of an outline structure of a primary slide pin in an electro-mechanical brake system according to an embodiment of this application;
FIG. 19 is a diagram of a cross-sectional structure of the primary slide pin in the electro-mechanical brake system according to the embodiment shown in FIG. 18 of this application;
FIG. 20 is a diagram of an outline structure of a caliper body in an electro-mechanical brake apparatus according to an embodiment of this application;
FIG. 21 is a cross-sectional diagram of an electro-mechanical brake apparatus in which a part of a structure is hidden according to an embodiment of this application; and
FIG. 22 is a diagram of an arrangement of an internal structure of an electro-mechanical brake apparatus according to an embodiment of this application.

### DESCRIPTION OF EMBODIMENTS

The following describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

In this specification, the sequence numbers, such as "first" and "second", of components are merely intended to distinguish between the described objects, and do not have any sequential or technical meaning. Unless otherwise specified, the "connection" in this application includes a direct connection and an indirect connection. In the descriptions of this application, it should be understood that an orientation or a position relationship indicated by the terms "above", "below", "front", "back", "top", "bottom", "inside", "outside", and the like is based on an orientation or a position relationship shown in the accompanying drawings, and is merely intended for ease of describing this application and simplifying description, but does not indicate or imply that a described apparatus or element needs to have a specific orientation or be constructed and operated in a specific orientation. Therefore, such terms shall not be understood as a limitation on this application.

In this application, unless otherwise specified and limited, when a first feature is "above" or "below" a second feature, the first feature may be in direct contact with the second feature, or the first feature may be in indirect contact with the second feature through an intermediate medium. In addition, that the first feature is "above" or "over" the second feature may be that the first feature is right above or obliquely above the second feature, or merely mean that a horizontal height of the first feature is greater than that of the second feature. That the first feature is "below" or "under" the second feature may be that the first feature is right below or obliquely below the second feature, or merely mean that a horizontal height of the first feature is less than that of the second feature.

This application provides an electro-mechanical brake apparatus with a biased caliper body. The electro-mechanical brake apparatus includes a caliper body, a reducer, and a friction pad. The caliper body is configured to connect a caliper rack and the reducer. The reducer is configured to drive, through a plurality of transmission members, the friction pad to shift. The caliper body includes an avoidance hole and two slide pin accommodating holes. The avoidance hole is configured to avoid one transmission member between the reducer and the friction pad. The two slide pin accommodating holes are separately configured to accommodate one slide pin of the caliper rack.

In an axial direction of the slide pin accommodating hole, the reducer and the friction pad are oppositely arranged, an extension direction of the slide pin accommodating hole faces the reducer, and an opening direction of the slide pin accommodating hole is away from the reducer.

In the electro-mechanical brake apparatus in this application, the opening direction of the slide pin accommodating hole for accommodating the slide pin in the caliper body is changed to match a gravity center shift of the electro-mechanical brake apparatus, and improve a force condition of the slide pin so as to reduce friction force and improve braking efficiency. This application provides an electro-mechanical brake system. The electro-mechanical brake system includes a caliper rack, a slide pin, and the electro-mechanical brake apparatus. The caliper rack is fastened to a vehicle frame. One end of the slide pin is fastened to the caliper rack, and the other end extends into a slide pin accommodating hole of a caliper body in the electro-mechanical brake apparatus. In a process of sliding relative to the slide pin, a gravity center of the electro-mechanical brake apparatus is always within a length range of the slide pin or close to the slide pin, thereby mitigating the force applied to the slide pin, and improving braking efficiency of the electro-mechanical brake system.

This application provides a vehicle. The vehicle includes a wheel and the electro-mechanical brake system, where a length direction of the slide pin in the electro-mechanical brake apparatus is parallel to a rotation axial direction of a brake disc of the wheel. The vehicle according to this application has high braking efficiency.

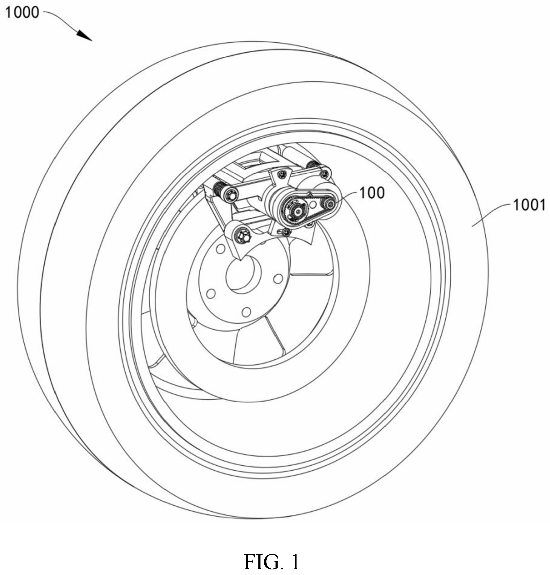

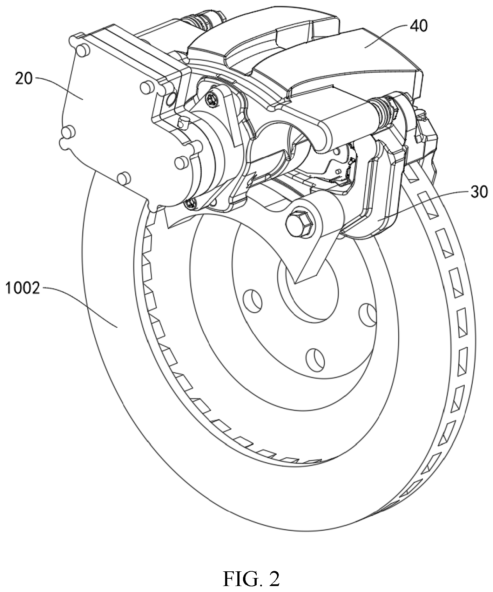

Refer to both FIG. 1 and FIG. 2. FIG. 1 is a diagram of an operating scenario of an electro-mechanical brake system 100 according to an embodiment of this application. FIG. 2 is a diagram of an outline structure of the electro-mechanical brake system 100 according to embodiments of this application. To clearly show an internal functional structure of the electro-mechanical brake system 100, a structure of a part of a housing in the electro-mechanical brake system 100 is hidden in FIG. 1, and FIG. 1 shows only a partial structure of a vehicle 1000 at a wheel 1001. As shown in both FIG. 1 and FIG. 2, the vehicle 1000 provided in embodiments of this application includes the wheel 1001 and the electro-mechanical brake system 100. The electro-mechanical brake system 100 is fastened to a vehicle frame of the vehicle 1000, and is disposed at a position corresponding to the wheel 1001. The electro-mechanical brake system 100 is configured to brake the wheel 1001.

In an embodiment, a brake disc 1002 is coaxially fastened to the wheel 1001, and the brake disc 1002 rotates synchronously with the wheel 1001 when the vehicle 1000 travels. The electro-mechanical brake system 100 is fastened to the vehicle frame (not shown in the figure), and the electro-mechanical brake system 100 is disposed corresponding to the brake disc 1002. The electro-mechanical brake system 100 generates friction force through contact with the brake disc 1002 to brake the brake disc 1002, and indirectly brakes the wheel 1001.

It should be noted that in the embodiment shown in FIG. 1, only one wheel 1001 and one electro-mechanical brake system 100 are used as an example for description. In an actual application scenario, the electro-mechanical brake system 100 may be correspondingly disposed on a part of wheels 1001 or each wheel 1001 in the vehicle 1000.

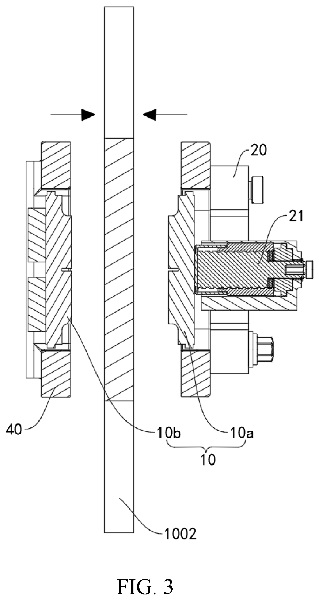

Refer to FIG. 3 with reference to FIG. 2. FIG. 3 is a diagram of a cross-sectional structure of an electro-mechanical brake system according to an embodiment of this application. As shown in FIG. 2 and FIG. 3, the electro-mechanical brake system 100 includes a caliper rack 30 and an electro-mechanical brake apparatus also provided in this application. The electro-mechanical brake apparatus includes a friction pad 10 (there are two friction pads 10 in the embodiment shown in FIG. 3), a brake assembly 20, and a caliper body 40. The brake assembly 20 may include the plurality of transmission members. The plurality of transmission members are located on a side of the caliper body 40 along a rotation axis of the brake disc 1002. The plurality of transmission members match each other for transmission, and drive the friction pad 10 to slide in a direction parallel to the rotation axis of the brake disc 1002. The brake assembly 20 is further configured to push the caliper body 40 to drive the other friction pad 10 to slide toward the brake disc 1002.

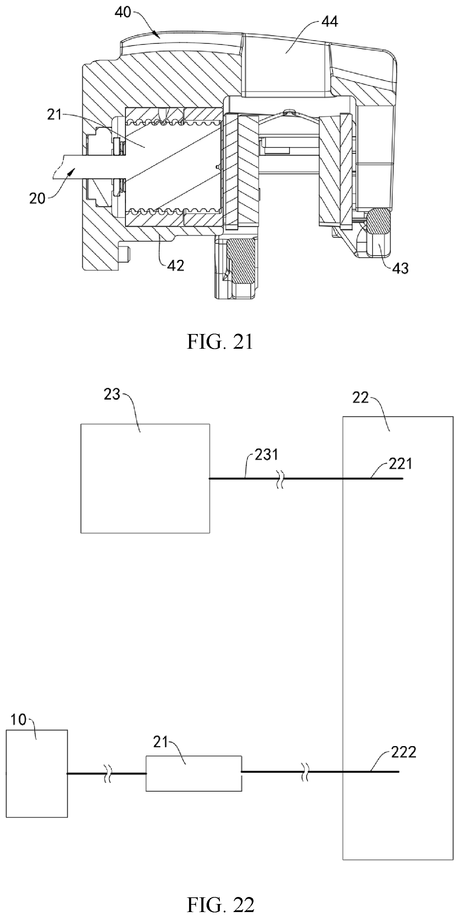

The brake assembly 20 further includes a reducer 22 (refer to FIG. 22), and the reducer 22 is in transmission connection to a plurality of transmission members to drive the friction pad 10 to slide. In other words, the electro-mechanical brake apparatus in this application includes the caliper body 40, the reducer 22, and the friction pad 10. The caliper body 40 is configured to connect the caliper rack 30 and the reducer 22. The reducer 22 is configured to drive, through the plurality of transmission members, the friction pad 10 to shift.

In an embodiment, the plurality of transmission members of the brake assembly 20 include a reversing mechanism 21, and the reversing mechanism 21 is accommodated in the caliper body 40. The reversing mechanism 21 and the friction pad 10 are arranged along the rotation axis of the brake disc 1002, that is, the reversing mechanism 21 is located on a side of the friction pad 10. The reversing mechanism 21 is configured to drive an adjacent friction pad 10 to slide toward the brake disc 1002 until the adjacent friction pad 10 contacts the brake disc 1002, so that friction force is generated between the friction pad 10 and the brake disc 1002 to brake the brake disc 1002, thereby indirectly braking the wheel 1001 and implementing effect of braking the vehicle 1000.

The rotation axis of the brake disc 1002 may be understood as an axial direction of the brake disc 1002, or may be understood as a connection line between respective circle centers of two end faces of the brake disc 1002.

In an embodiment, in the axial direction of the brake disc 1002, the two friction pads 10 are respectively arranged on two opposite sides of the brake disc 1002. As shown in FIG. 3 of this application, an example in which there are two friction pads 10 is used for description, and in embodiments of this application, a first friction pad 10a and a second friction pad 10b are respectively used as examples for description.

For example, as shown in FIG. 2 and FIG. 3, the caliper rack 30 is configured to be fastened to a vehicle frame (not shown in the figure) of the vehicle 1000, the caliper body 40 is slidably connected to the caliper rack 30, and a direction in which the caliper body 40 slides relative to the caliper rack 30 is parallel to the axial direction of the brake disc 1002 of the wheel 1001, which may also be understood that the direction in which the caliper body 40 slides relative to the caliper rack 30 is parallel to a direction in which the reversing mechanism 21 shifts.

Along a rotation axis of the brake disc 1002, the first friction pad 10a is located on a side that is of the brake disc 1002 and that is close to the reversing mechanism 21, the first friction pad 10a is slidably connected to the caliper body 40, and the second friction pad 10b is located on a side that is of the brake disc 1002 and that is away from the reversing mechanism 21, and is fastened to the caliper body 40.

Specifically, the reversing mechanism 21 moves toward the brake disc 1002 along the rotation axis of the brake disc 1002, and synchronously drives the first friction pad 10a to slide toward the brake disc 1002. A direction in which the first friction pad 10a slides is parallel to the rotation axis of the brake disc 1002.

In this case, when the reversing mechanism 21 shifts and pushes the first friction pad 10a to move toward the brake disc 1002 until the first friction pad 10a abuts against the brake disc 1002, the brake disc 1002 correspondingly generates counter pushing force applied to the first friction pad 10a, that is, the first friction pad 10a has counter pushing force along the rotation axis of the brake disc 1002. The reversing mechanism 21 continues to shift under the action of the pushing force, and may drive the caliper body 40 to slide relative to the caliper rack 30.

Because a direction of the counter pushing force applied by the brake disc 1002 to the first friction pad 10a is a direction along the rotation axis of the brake disc 1002 toward the reversing mechanism 21, the caliper body 40 is driven to slide in the direction along the rotation axis of the brake disc 1002 toward the reversing mechanism 21, and the second friction pad 10b fastened to the caliper body 40 is synchronously driven to slide in a direction along the rotation axis of the brake disc 1002 toward the brake disc 1002. In this case, the first friction pad 10a and the second friction pad 10b slide along the rotation axis of the brake disc 1002 toward the brake disc 1002, to achieve effect that the reversing mechanism 21 drives the two friction pads 10 to approach each other (as shown by solid line arrows in FIG. 3).

In other words, that the reversing mechanism 21 drives the first friction pad 10a to shift toward the brake disc 1002 to brake the wheel 1001 may be understood as that the reversing mechanism 21 drives the first friction pad 10a to slide toward the brake disc 1002, and drives, through the caliper body 40, the second friction pad 10b to synchronously slide toward the brake disc 1002, so that the two friction pads 10 slide in directions in which the two friction pads 10 approach each other.

The pushing force generated by the brake assembly 20 may form pushing force pushing one friction pad 10 to slide in a rotation axis direction of the brake disc 1002 and pushing force pushing the caliper body 40 to reversely slide, to simultaneously drive the two friction pads 10 to approach each other to brake the brake disc 1002.

When the two friction pads 10 approach each other in the axial direction of the brake disc 1002 until the two friction pads 10 respectively abut against the two opposite end faces of the brake disc 1002, friction force is generated between the friction pads 10 and the brake disc 1002 to reduce a rotational speed of the brake disc 1002. Because the brake disc 1002 rotates synchronously with the wheel 1001, reducing the rotational speed of the brake disc 1002 synchronously reduces a rotational speed of the wheel 1001, to achieve effect of braking the wheel 1001, thereby implementing a function of the electro-mechanical brake system 100 to brake the vehicle 1000.

In addition, in embodiments of this application, the two friction pads 10 are disposed to respectively abut against the two opposite end faces of the brake disc 1002 in the axial direction of the brake disc 1002 to brake the brake disc 1002. Because the friction pads 10 have large areas, the friction pads 10 have large contact areas with the brake disc 1002 when abutting against the end faces of the brake disc 1002, and large friction force can be formed between the brake disc 1002 and the friction pads 10, to ensure reliable braking on the wheel 1001.

It may be understood that a braking process of the electro-mechanical brake system 100 may be but is not limited to as follows: The reversing mechanism 21 moves along the rotation axis of the brake disc 1002 toward the brake disc 1002, the reversing mechanism 21 generates the pushing force and pushes the first friction pad 10a to slide toward the brake disc 1002, and synchronously pushes the caliper body 40 to slide relative to the caliper rack 30, to drive the second friction pad 10b fastened to the caliper body 40 to slide toward the brake disc 1002. The first friction pad 10a and the second friction pad 10b approach each other and contact the brake disc 1002 to form friction. The first friction pad 10a and the second friction pad 10b match to achieve effect that the electro-mechanical brake system 100 brakes the brake disc 1002.

Because the caliper rack 30 is fastened to the vehicle frame of the vehicle 1000, when the reversing mechanism 21 moves in the direction along the rotation axis of the brake disc 1002 toward the brake disc 1002, the caliper body 40 is synchronously driven to slide. It may be understood that, in this case, a direction in which the reversing mechanism 21 shifts is parallel to the direction in which the caliper body 40 slides relative to the caliper rack 30. That is, the direction in which the reversing mechanism 21 shifts is parallel to the rotation axis of the brake disc 1002, or the direction in which the reversing mechanism 21 shifts is parallel to an axle of the wheel 1001.

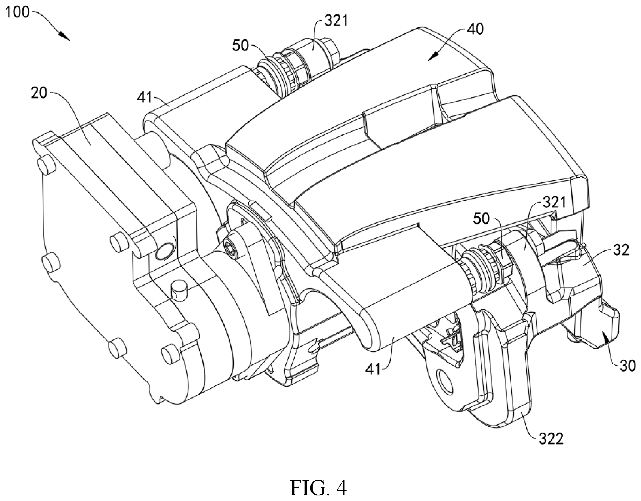

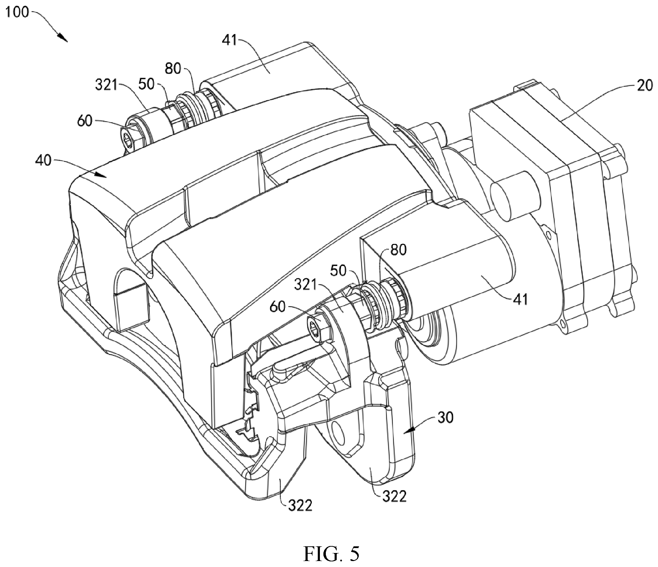

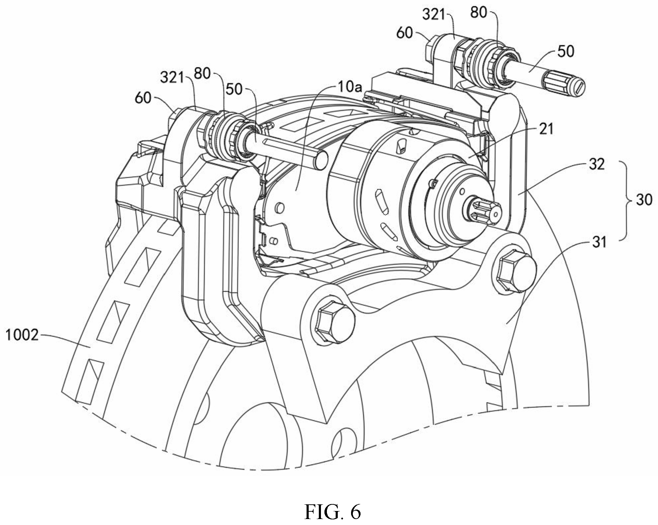

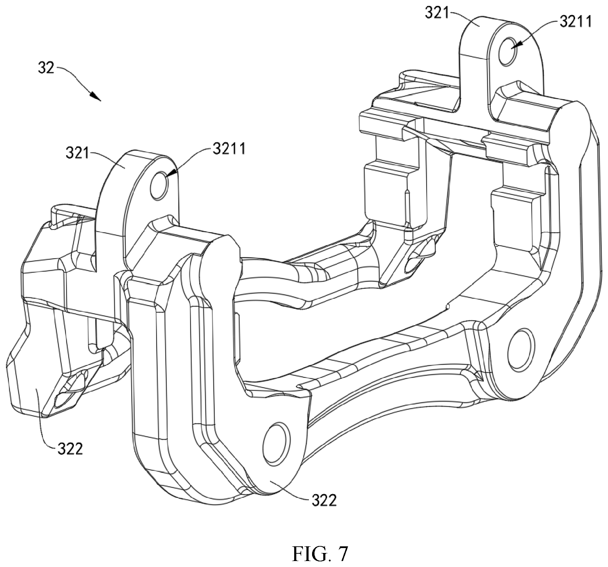

Refer to FIG. 4 to FIG. 7. FIG. 4 is a diagram of an outline structure of the electro-mechanical brake system 100 according to embodiments of this application. FIG. 5 is a diagram of an outline structure of another side of the electro-mechanical brake system 100 according to embodiments of this application. FIG. 6 is a diagram of an outline structure of the electro-mechanical brake system 100 in which a part of the structure is hidden according to embodiments of this application. FIG. 7 is a diagram of a structure of the caliper rack 30 of the electro-mechanical brake system 100 according to embodiments of this application. As shown in FIG. 4 to FIG. 7, the electro-mechanical brake system 100 includes a slide pin 50. The slide pin 50 is configured to slidably connect the caliper body 40 to the caliper rack 30. A length direction of the slide pin 50 may be understood as an axis extension direction (that is, an axial direction) of the slide pin 50, and the length direction of the slide pin 50 is parallel to the rotation axis direction of the brake disc 1002, that is, the length direction of the slide pin 50 is parallel to the direction in which the friction pad 10 slides.

In other words, the electro-mechanical brake system 100 in this application includes the caliper rack 30, the slide pin 50, and the electro-mechanical brake apparatus. The caliper rack 30 is fastened to the vehicle frame. One end of the slide pin 50 is fastened to the caliper rack 30, and the other end of the slide pin 50 extends into the caliper body 40 in the electro-mechanical brake apparatus.

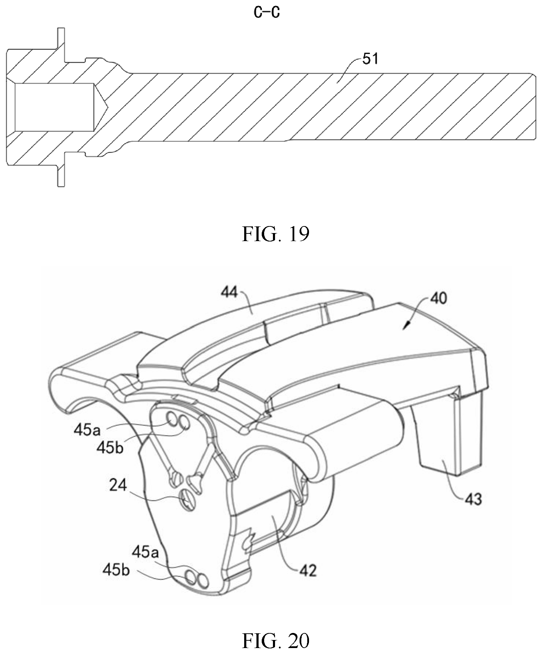

Specifically, as shown in FIG. 20, the caliper body 40 includes an avoidance hole 24 and two slide pin accommodating holes. The avoidance hole 24 is configured to avoid one transmission member between the reducer 22 and the friction pad 10, that is, the one transmission member passes through the avoidance hole 24 of the caliper body 40, and implements transmission connection between the reducer 22 and the friction pad 10. The two slide pin accommodating holes are separately configured to accommodate one slide pin 50 fastened to the caliper rack 30. In an axial direction of the slide pin accommodating hole, the reducer 22 and the friction pad 10 are oppositely arranged, an extension direction of the slide pin accommodating hole faces the reducer 22, and an opening direction of the slide pin accommodating hole is away from the reducer 22.

Correspondingly, in the electro-mechanical brake system 100 in this application, an end that is of the slide pin 50 and that is away from the caliper rack 30 extends into the slide pin accommodating hole of the caliper body 40.

In this application, the reducer 22 of the electro-mechanical brake apparatus is fastened to the caliper body 40, and drive, through the plurality of transmission members, the friction pad 10 to shift to brake a wheel 1001. The caliper body 40 is slidably connected to the caliper rack 30 through the slide pin 50, and the opening direction of the slide pin accommodating hole of the caliper body 40 for accommodating the slide pin 50 is away from the reducer 22. The extension direction of the slide pin 50 in the caliper body 40 is a direction toward the reducer 22.

Because most of volumes of the caliper body 40 and the plurality of transmission members are located on a side close to the reducer 22, in a process in which the caliper body 40 slides relative to the caliper rack 30, a gravity center of the electro-mechanical brake apparatus is always within a length range of the slide pin 50 or close to the slide pin 50. In this way, the electro-mechanical brake apparatus reduces eccentric torque applied to the slide pin 50 in the braking process, to mitigate force applied to the slide pin 50, thereby reducing friction force, and improving braking efficiency of the electro-mechanical brake apparatus.

In the electro-mechanical brake system 100 provided in this application, the caliper rack 30 is fastened between the vehicle frame and the slide pin 50, and the electro-mechanical brake apparatus implements slidable connection to the vehicle frame through the slide pin 50. In a process of sliding relative to the slide pin 50, a gravity center of the electro-mechanical brake apparatus is always within the length range of the slide pin 50 or close to the slide pin 50, thereby improving the force condition of the slide pin 50, and improving braking efficiency of the electro-mechanical brake system 100.

In an embodiment, the caliper body 40 includes two connection holes. The two connection holes are configured to fasten the reducer 22, and a direction in which the two connection holes are oppositely arranged intersects that for the two slide pin accommodating holes. In a radial direction of the slide pin accommodating hole, the two connection holes are respectively arranged on two sides of the avoidance hole 24, and the two slide pin accommodating holes are also respectively arranged on two sides of the avoidance hole 24. In the axial direction of the slide pin accommodating hole, opening directions of the two connection holes face the reducer 22.

As shown in FIG. 20, the two connection holes may be understood as two left connection holes 45a or two right connection holes 45b. When the two connection holes are two left connection holes 45a, the reducer 22 deflects toward one side relative to the caliper body 40, so that the electro-mechanical brake system 100 is adapted to a left wheel of the vehicle 1000. When the two connection holes are two right connection holes 45b, the reducer 22 deflects toward the other side relative to the caliper body 40, so that the electro-mechanical brake system 100 is assembled on a right wheel of the vehicle 1000.

In this way, in the axial direction of the slide pin accommodating hole, the opening direction of the connection hole is opposite to the opening direction of the slide pin accommodating hole, and the caliper rack 30 and the reducer 22 are respectively arranged on two sides of the caliper body 40, to ensure small flip torque applied to the slide pin 50. An arrangement direction of the connection holes intersects an arrangement direction of the slide pin accommodating holes, so that the connection holes and the slide pin accommodating holes are staggered in the axial direction of the slide pin accommodating hole, to reduce a size of the caliper body 40 in the axial direction of the slide pin accommodating hole.

In an embodiment, the direction in which the two connection holes are oppositely arranged is perpendicular to that for the two slide pin accommodating holes. This arrangement facilitates mounting of the slide pin 50 and the reducer 22, and enables the connection holes and the slide pin accommodating holes to be staggered in a circumferential direction of the avoidance hole 24, thereby improving structural stability of the caliper body 40.

In an embodiment, distances between an axis of the avoidance hole 24 and axes of the two slide pin accommodating holes are equal. To be specific, the two slide pin accommodating holes are symmetrically distributed on two sides of the avoidance hole 24, so that cooperation between the caliper body 40 and two slide pins 50 is balanced, thereby reducing the flip torque between the two slide pins 50 in a sliding process of the caliper body 40.

In an embodiment, one end of the slide pin 50 is fastened to the caliper rack 30, and the other end extends in a direction parallel to the rotation axis of the brake disc 1002 away from the brake disc 1002. The caliper body 40 is sleeved on the other end that is of the slide pin 50 and that is away from the caliper rack 30, and may slide relative to the caliper rack 30 in the length direction of the slide pin 50, thereby implementing effect of the slidable connection to the caliper rack 30.

As shown in FIG. 4 to FIG. 7, the caliper rack 30 includes a knuckle 31 and a rack body 32 that are fastened. The caliper rack 30 is fastened to the vehicle frame of the vehicle 1000 by using the knuckle 31. In a radial direction of the brake disc 1002, the knuckle 31 is located on a side that is of the rack body 32 and that is close to the axis of the brake disc 1002.

Specifically, the rack body 32 of the caliper rack 30 includes two mounting ears 321. In the radial direction of the brake disc 1002, the two mounting ears 321 are located on a side that is of the rack body 32 and that is away from the knuckle 31. In a direction perpendicular to the length direction of the slide pin 50, the two mounting ears 321 are respectively arranged on two sides of the friction pad 10. It may also be understood that the two mounting ears 321 are respectively arranged on two sides of the friction pad 10 in a direction perpendicular to the direction in which the friction pad 10 slides.

In an embodiment, a quantity of slide pins 50 is the same as a quantity of mounting ears 321, and each slide pin 50 is disposed corresponding to one mounting ear 321. As shown in FIG. 4 to FIG. 7, an example in which there are two slide pins 50 is used for description.

For example, there are two slide pins 50, and the two slide pins 50 are in a one-to-one correspondence with the two mounting ears 321. Along the rotation axis of the brake disc 1002, an end that is of each slide pin 50 and that is away from the caliper body 40 (that is, the end close to the caliper rack 30) is attached and fastened to a corresponding mounting ear 321.

In an embodiment, the electro-mechanical brake system 100 includes a fastening bolt 60, and the end that is of the slide pin 50 and that is close to the caliper rack 30 is fastened by using the fastening bolt 60.

For example, as shown in FIG. 4 to FIG. 7, a quantity of fastening bolts 60 is the same as the quantity of slide pins 50, and each fastening bolt 60 is disposed corresponding to one slide pin 50. In this specification of this application, an example in which there are two fastening bolts 60 is used for description.

Specifically, in the length direction (that is, the axial direction) of the slide pin 50, the fastening bolt 60 and the slide pin 50 are respectively arranged on two sides of the mounting ear 321 of the caliper rack 30, and the fastening bolt 60 passes through an inner hole (a through hole 3211) of the mounting ear 321 in the caliper rack 30 and is fastened to an end of the slide pin 50, to fasten one end of the slide pin 50 to the caliper rack 30. In other words, in the direction perpendicular to the length direction of the slide pin 50, the two fastening bolts 60 are respectively arranged on two opposite sides of the friction pad 10. In the length direction of the slide pin 50, one fastening bolt 60 and a corresponding slide pin 50 are coaxially arranged on two opposite sides of one mounting ear 321.

Each mounting ear 321 is provided with a through hole 3211, and each through hole 3211 runs through the mounting ear 321 along the rotation axis of the brake disc 1002.

Each fastening bolt 60 extends into a through hole 3211 of a mounting ear 321 corresponding to the fastening bolt 60 toward one end of the caliper body 40, passes through the through hole 3211, and is fastened to an end of the slide pin 50, thereby fastening the slide pin 50 on the caliper rack 30.

It can be understood that, as shown in FIG. 4 to FIG. 7, each slide pin 50 is fastened to the caliper rack 30 by using the fastening bolt 60. The slide pin 50 and the corresponding fastening bolt 60 may be fastened in, but not limited to, a thread cooperation manner. This can improve stability and reliability of connection between the slide pin 50 and the caliper rack 30, and prevent the connection between the slide pin 50 and the caliper rack 30 from being loose or broken due to vibration or other external force, thereby improving braking reliability of the electro-mechanical brake system 100.

In addition, the fastening bolt 60 and the slide pin 50 are respectively arranged on the two opposite sides of the mounting ear 321 corresponding to the fastening bolt 60 and the slide pin 50, and respectively extend into the through hole 3211 of the mounting ear 321 from the two opposite sides of the mounting ear 321 for fastening, to improve assembly convenience between the slide pin 50 and the fastening bolt 60. In addition, the slide pin 50 extends into the through hole 3211 to be fastened to the fastening bolt 60, to ensure that the extension direction of the slide pin 50 is parallel to the rotation axis of the brake disc 1002, so that when the caliper body 40 slides relative to the caliper rack 30 by using the slide pin 50, it is ensured that the direction in which the caliper body 40 slides is parallel to the rotation axis of the brake disc 1002, thereby further improving sliding precision and stability of the caliper body 40.

In an embodiment, the rack body 32 of the caliper rack 30 includes two fastening portions 322. The two fastening portions 322 are respectively arranged on two sides of the brake disc 1002 in the length direction of the slide pin 50, and a distance between the two fastening portions 322 is greater than a thickness of the brake disc 1002.

In an embodiment, in the radial direction of the brake disc 1002, the two mounting ears 321 are both located on an outer side of the brake disc 1002. Each mounting ear 321 bridges a gap between the two fastening portions 322 in the length direction of the slide pin 50. In other words, the two mounting ears 321 are spaced from each other, and are respectively configured to fasten two fastening portions 322.

It can be understood that the fastening portions 322 are disposed on the two sides of the brake disc 1002, and cooperate to limit axial fluttering of the brake disc 1002. The mounting ear 321 is configured to bridge the gap between the two fastening portions 322, and enable one end of the slide pin 50 to be close to the brake disc 1002. In a process in which the brake assembly 20 drives the caliper body 40 to brake, an end of the slide pin 50 is disposed close to the brake disc 1002, to reduce flip torque of the electro-mechanical brake system 100.

In an embodiment, along the rotation axis of the brake disc 1002, the other end that is of the slide pin 50 and that is away from the fastening bolt 60 extends in the direction away from the brake disc 1002, and the other end that is of the slide pin 50 and that is away from the fastening bolt 60 extends into the caliper body 40 and is slidably connected to the caliper body 40.

For example, as shown in FIG. 4 to FIG. 7, the caliper body 40 includes two feet 41, and the two feet 41 are disposed in a one-to-one correspondence with the two mounting ears 321.

In other words, the two feet 41 are respectively arranged on two sides of the caliper body 40 in the direction perpendicular to the length direction of the slide pin 50, and each foot 41 is aligned with one mounting ear 321 in the length direction of the slide pin 50. Along the rotation axis of the brake disc 1002, the two feet 41 are located on a same side of the two mounting ears 321, that is, each foot 41 is located, along the rotation axis of the brake disc 1002, on a side that is of a mounting ear 321 corresponding to the foot 41 and that is away from the friction pad 10.

The other end that is of each slide pin 50 and that is away from the fastening bolt 60 extends into a corresponding foot 41, and may slide relative to the foot 41, thereby implementing effect of slidable connection between the caliper rack 30 and the caliper body 40.

It may be understood that the other end that is of the slide pin 50 and that is away from the mounting ear 321 is disposed to extend into the foot 41 corresponding to the slide pin 50 and slide, and the foot 41 can limit movement of the slide pin 50 in the axial direction of the brake disc 1002, to avoid a shift of the slide pin 50 from reducing shift precision of the caliper body 40, thereby further improving reliability of the caliper body 40 to drive the friction pad 10 to brake the wheel 1001. In other words, the slide pin 50 is disposed to extend into the foot 41 and slide in the foot 41, to form guiding effect on the direction in which the caliper body 40 slides relative to the caliper rack 30, thereby limiting the caliper body 40 to drive the friction pad 10 along the rotation axis of the brake disc 1002.

In addition, as shown in FIG. 4 to FIG. 7, there are two slide pins 50, and the two slide pins 50 are distributed on two sides of the friction pad 10 and extend in parallel. When the caliper body 40 is slidably connected to both the two slide pins 50 and slides relative to the caliper rack 30, a force condition of the caliper body 40 can be improved, it is ensured that the caliper body 40 smoothly slides relative to the caliper rack 30, and the caliper body 40 is further limited to slide along the rotation axis of the brake disc 1002, to improve braking efficiency and reliability of the electro-mechanical brake system 100.

Generally, due to a limitation of wheel end space of the vehicle, components including a brake motor and a reducer mounted on the electro-mechanical brake apparatus need to be arranged in an axial direction of a brake disc, which correspondingly increases a size of the electro-mechanical brake apparatus in this direction, and causes a gravity center of the electro-mechanical brake apparatus to shift. Large eccentric torque is applied to a slide pin for guiding in the electro-mechanical brake apparatus, which increases friction force and reduce braking efficiency.

However, the slide pin 50 of the electro-mechanical brake system 100 in this application extends in the direction away from the brake disc 1002, the caliper body 40 is slidably connected to the slide pin 50 at the end that is of the slide pin 50 and that is away from the brake disc 1002, and the brake assembly 20 is also located at the end that is of the slide pin 50 and that is away from the brake disc 1002 with the caliper body 40. Because most of a volume of the caliper body 40 and the whole brake assembly 20 are located at the end that is of the slide pin 50 and that is away from the brake disc 1002, in the electro-mechanical brake system 100, a part of a structure that may slide relative to the slide pin 50 always has a center of gravity always within the length range of the slide pin 50 or close to the slide pin 50. In this way, the eccentric torque applied to the slide pin 50 in the braking process is reduced, to mitigate the force applied to the slide pin 50, thereby reducing the friction force, and improving the braking efficiency of the electro-mechanical brake system 100.

The vehicle 1000 in this application is braked by the electro-mechanical brake system 100 in this application. The electro-mechanical brake system 100 provided in this application reduces the eccentric torque applied to the slide pin 50 in the braking process, thereby reducing friction force inside the electro-mechanical brake system 100, to improve braking efficiency of the vehicle 1000 in this application. In other words, the vehicle 1000 in this application is equipped with the electro-mechanical brake system 100 provided in any one of the foregoing embodiments, and therefore, the vehicle 1000 in this application has all possible beneficial effect of the electro-mechanical brake system 100 provided in any one of the foregoing embodiments.

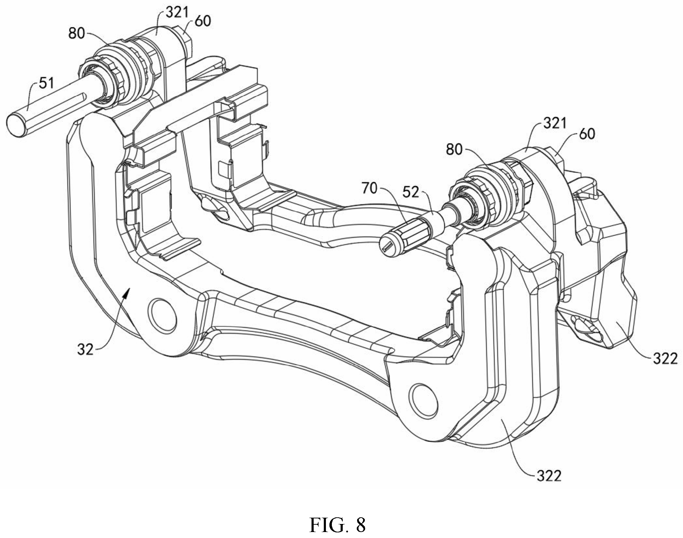

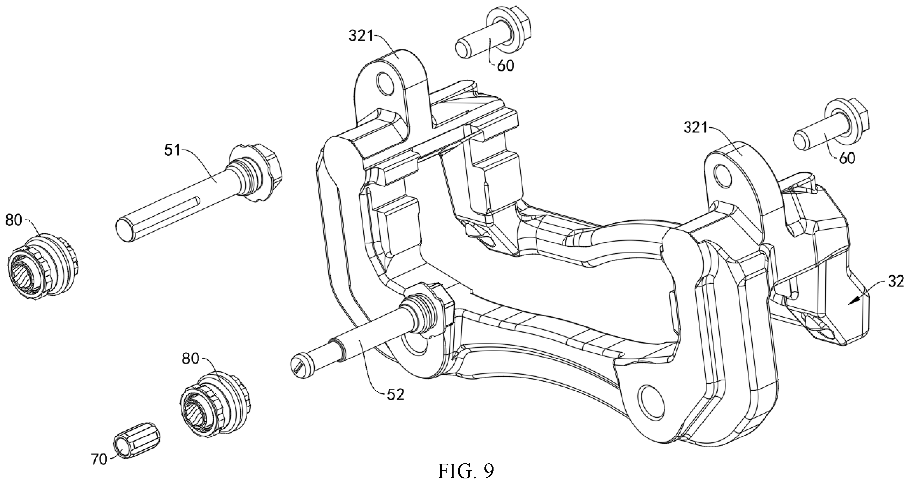

Refer to both FIG. 8 and FIG. 9. FIG. 8 is a diagram of a structure of the electro-mechanical brake system 100 in which a part of the structure is hidden according to embodiments of this application. FIG. 9 is an exploded diagram of a partial structure of the electro-mechanical brake system 100 according to the embodiment shown in FIG. 8 of this application. To clearly show a structure of the slide pin 50 assembled on the caliper rack 30, structures such as the friction pad 10, the brake assembly 20, and the caliper body 40 of the electro-mechanical brake system 100 as shown in FIG. 8 are hidden.

In an embodiment, the two slide pins 50 include a primary slide pin 51 and a secondary slide pin 52. As shown in FIG. 8 and FIG. 9, both the primary slide pin 51 and the secondary slide pin 52 extend along the rotation axis of the brake disc 1002, and the primary slide pin 51 and the secondary slide pin 52 are respectively arranged on two opposite sides of the friction pad 10 in the direction perpendicular to the rotation axis of the brake disc 1002.

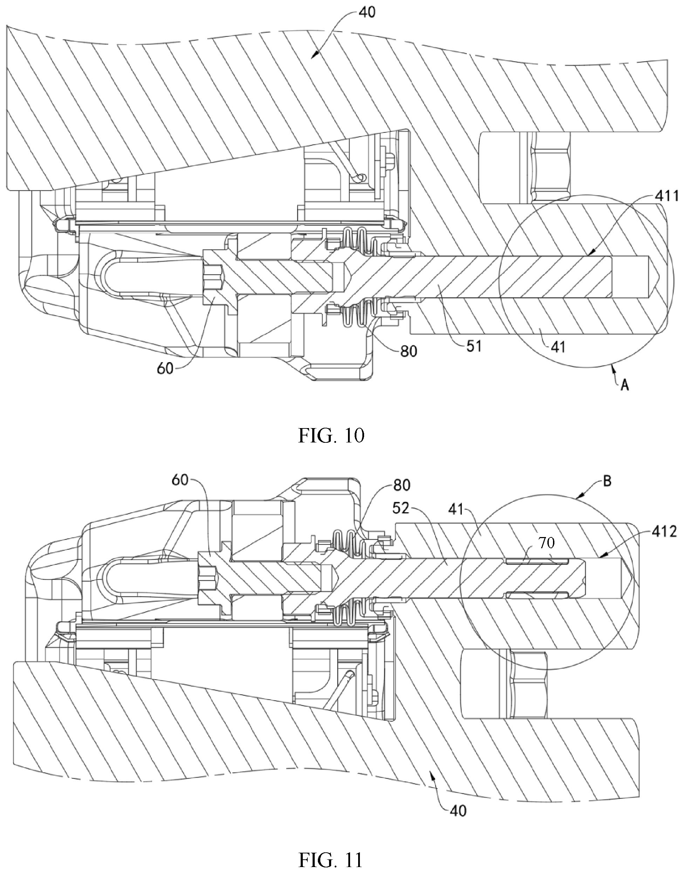

Refer to both FIG. 10 and FIG. 11. FIG. 10 is a diagram of a partial cross-sectional structure of the electro-mechanical brake system 100 according to embodiments of this application. FIG. 11 is a diagram of a partial cross-sectional structure of the electro-mechanical brake system 100 according to embodiments of this application. As shown in FIG. 10 and FIG. 11, one foot 41 of the caliper body 40 is provided with a primary slide pin accommodating hole 411, and the other foot 41 is provided with a secondary slide pin accommodating hole 412. The primary slide pin accommodating hole 411 is sleeved on a periphery of the primary slide pin 51, and the secondary slide pin accommodating hole 412 is sleeved on a periphery of the secondary slide pin 52.

As shown in FIG. 10, the primary slide pin accommodating hole 411 extends in the length direction of the slide pin 50, and is disposed corresponding to the primary slide pin 51. Along the rotation axis of the brake disc 1002, one end of the primary slide pin 51 is fastened to the mounting ear 321, and the other end that is of the primary slide pin 51 and that is away from the mounting ear 321 extends into the primary slide pin accommodating hole 411.

As shown in FIG. 11, the secondary slide pin accommodating hole 412 extends in the length direction of the slide pin 50, and is disposed corresponding to the secondary slide pin 52. Along the rotation axis of the brake disc 1002, one end of the secondary slide pin 52 is fastened to the mounting ear 321, and the other end that is of the secondary slide pin 52 and that is away from the mounting ear 321 extends into the secondary slide pin accommodating hole 412.

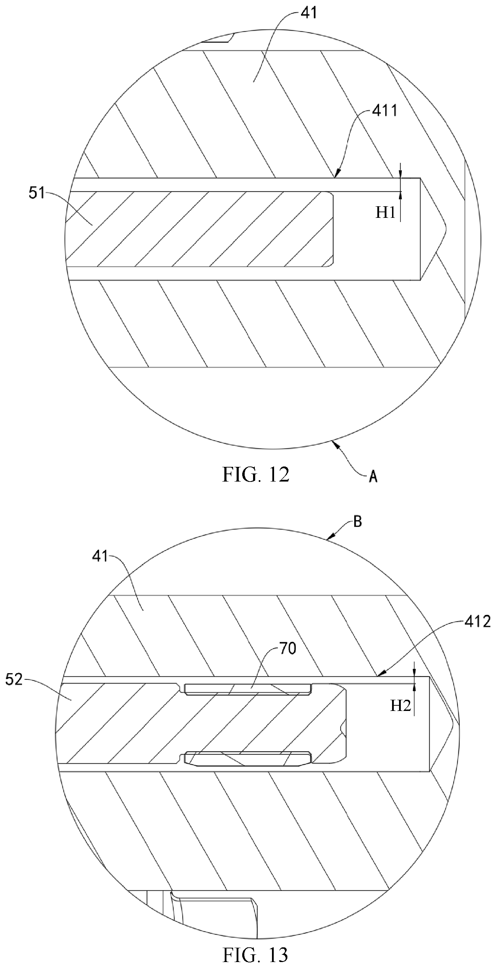

FIG. 12 is a diagram of an enlarged partial cross-sectional structure at a position A of the electro-mechanical brake system 100 according to the embodiment shown in FIG. 10 of this application. As shown in FIG. 12, in a radial direction of the primary slide pin 51, a first spacing H1 exists between the primary slide pin 51 and the primary slide pin accommodating hole 411. The first spacing H1 may be understood as a spacing distance, in the radial direction of the primary slide pin 51, between an outer circumferential surface of the primary slide pin 51 and an inner wall of the primary slide pin accommodating hole 411.

FIG. 13 is a diagram of an enlarged partial cross-sectional structure at a position B of the electro-mechanical brake system 100 according to the embodiment shown in FIG. 11 of this application. As shown in FIG. 13, in a radial direction of the secondary slide pin 52, a second spacing H2 exists between the secondary slide pin 52 and the secondary slide pin accommodating hole 412. The second spacing H2 may be understood as a spacing distance, in the radial direction of the secondary slide pin 52, between an outer circumferential surface of the secondary slide pin 52 and an inner wall of the secondary slide pin accommodating hole 412.

In an embodiment, the second spacing H2 is greater than the first spacing H1.

It may be understood that different spacings are configured between the two slide pins 50 and the slide holes corresponding to the caliper body 40, so that the two slide pins 50 can be controlled to have different occasions of overall collision with the caliper body 40 in the braking process, thereby avoiding an excessively large impact force caused when the two slide pins 50 contact the caliper body 40 at the same time, and prolonging time for the two slide pins 50 to act on the caliper body 40, to form a buffer for flip impact of the caliper body 40 on the caliper rack 30, thereby improving an internal force condition of the electro-mechanical brake system 100 and prolonging a service life.

Refer to FIG. 13 with reference to FIG. 8 and FIG. 9. As shown in FIG. 8, FIG. 9, and FIG. 13, the electro-mechanical brake system 100 includes a buffer sleeve 70. The buffer sleeve 70 is sleeved on the periphery of the secondary slide pin 52, and the buffer sleeve 70 is inserted into the secondary slide pin accommodating hole 412 with the secondary slide pin 52.

It may be understood that the buffer sleeve 70 is disposed between the slide pin 50 and the caliper body 40, to provide buffer effect when the slide pin 50 collides with the caliper body 40 in the braking process, further prolong time of collision between the slide pin 50 and an inner wall of the caliper body 40 to protect the slide pin 50, and reduce the eccentric torque applied to the slide pin 50 in the braking process, so as to improve the internal force condition of the electro-mechanical brake system 100 and prolong the service life. In addition, the buffer sleeve 70 is disposed between the slide pin 50 and the caliper body 40, to reduce friction force generated in the braking process between the slide pin 50 and the caliper body 40, thereby further mitigating force applied to the slide pin 50 and reducing the friction force.

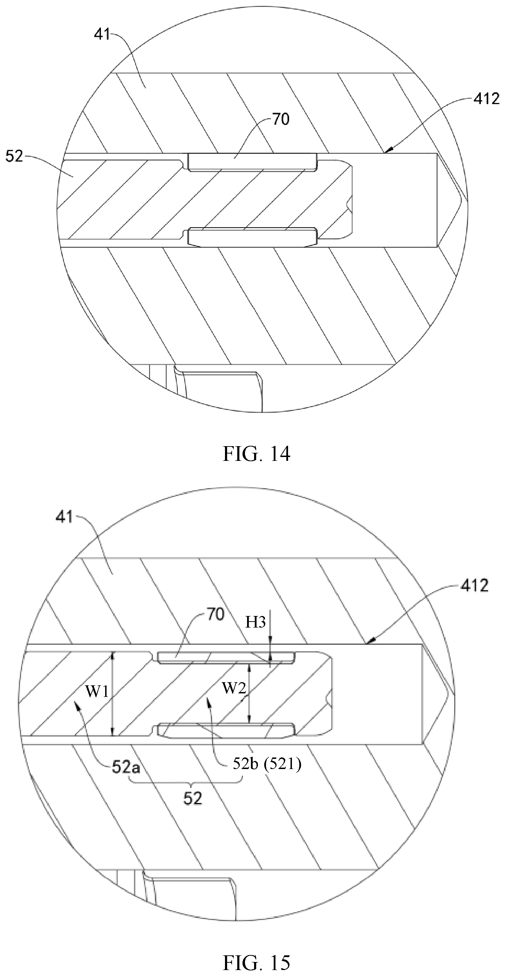

FIG. 14 is a diagram of an enlarged partial cross-sectional structure of the electro-mechanical brake system 100 according to the embodiment shown in FIG. 11 of this application. In an embodiment, an outer circumferential surface of the buffer sleeve 70 is attached to an inner circumferential surface of the secondary slide pin accommodating hole 412.

FIG. 15 is a diagram of an enlarged partial cross-sectional structure of the electro-mechanical brake system 100 according to the embodiment shown in FIG. 11 of this application. In an embodiment, in the radial direction of the secondary slide pin 52, a third spacing H3 exists between the buffer sleeve 70 and the secondary slide pin accommodating hole 412, and the third spacing H3 is smaller than the first spacing H1.

It may be understood that, as shown in FIG. 14 and FIG. 15, the spacing between the buffer sleeve 70 sleeved on the secondary slide pin 52 and the secondary slide pin accommodating hole 412 is configured to be less than the spacing between the primary slide pin 51 and the primary slide pin accommodating hole 411. For example, but it is not limited to the case that the outer circumferential surface of the buffer sleeve 70 shown in FIG. 14 is attached to the inner circumferential surface of the secondary slide pin accommodating hole 412, or the case that the third spacing H3 shown in FIG. 15 is less than the first spacing H1, so that an occasion of collision between the buffer sleeve 70 and the secondary slide pin accommodating hole 412 is earlier than an occasion of collision between the primary slide pin 51 and the primary slide pin accommodating hole 411. Therefore, the buffer sleeve 70 can form buffer effect on the primary slide pin 51, and the primary slide pin 51 can form buffer effect on the secondary slide pin 52. The electro-mechanical brake system 100 forms a two-stage buffer in the braking process to further improve the internal force condition and prolong the service life.

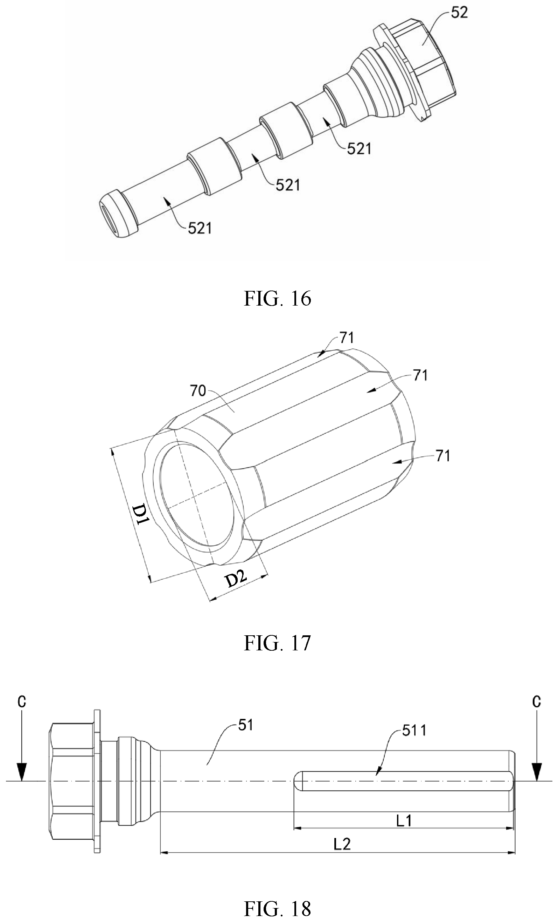

Refer to FIG. 16 with reference to FIG. 15. FIG. 16 is a diagram of an outline structure of the secondary slide pin 52 in the electro-mechanical brake system 100 according to embodiments of this application. In an embodiment, a positioning section 521 is concavely disposed on the outer circumferential surface of the secondary slide pin 52, a periphery of each positioning section 521 is sleeved with one buffer sleeve 70, and in the radial direction of the secondary slide pin 52, a sum of a thickness of the buffer sleeve 70 and a radius of the positioning section 521 is greater than a radius of the outer circumferential surface of the secondary slide pin 52.

In other words, in a length direction of the secondary slide pin 52, the secondary slide pin 52 has a first outer diameter section 52a and a second outer diameter section 52b, and an outer diameter W1 of the first outer diameter section 52a is greater than an outer diameter W2 of the second outer diameter section 52b. It may be understood that because the outer diameter W2 of the second outer diameter section 52b is less than the outer diameter W1 of the first outer diameter section 52a, the outer circumferential surface of the secondary slide pin 52 forms concave effect at a position of the second outer diameter section 52b. Therefore, that the positioning section 521 is concavely disposed on the outer circumferential surface of the secondary slide pin 52 may be understood as that a structure section of the secondary slide pin 52 at a position corresponding to the second outer diameter section 52b is constructed to be the positioning section 521.

It may be understood that, as shown in FIG. 15 and FIG. 16, the positioning section 521 is disposed, and the buffer sleeve 70 is sleeved on the periphery of the positioning section 521. Because the positioning section 521 is concavely disposed on the outer circumferential surface of the secondary slide pin 52, in the length direction of the secondary slide pin 52, two opposite end faces of the positioning section 521 abut against two opposite end faces of the buffer sleeve 70, to limit a shift of the buffer sleeve 70 in the length direction of the secondary slide pin 52, that is, to form holding effect on the buffer sleeve 70.

In addition, in the radial direction of the secondary slide pin 52, the sum of the thickness of the buffer sleeve 70 and the radius of the positioning section 521 is configured to be greater than the radius of the outer circumferential surface of the secondary slide pin 52. In this way, the outer circumferential surface of the buffer sleeve 70 is formed to be higher than the outer circumferential surface of the secondary slide pin 52, so that the secondary slide pin accommodating hole 412 contacts the buffer sleeve 70 first and then contacts the secondary slide pin 52, to further improve protection and buffer effect on the secondary slide pin 52, further improve the internal force condition of the electro-mechanical brake system 100, and prolong the service life.

In an embodiment, in the length direction of the secondary slide pin 52, a plurality of positioning sections 521 are spaced from each other on the outer circumferential surface of the secondary slide pin 52, and a periphery of each positioning section 521 is sleeved with one buffer sleeve 70 (as shown in FIG. 16).

It may be understood that, the plurality of positioning sections 521 are disposed, and each corresponding positioning section 521 is sleeved with one buffer sleeve 70, so that the periphery of the secondary slide pin 52 is sleeved with a plurality of buffer sleeves 70. In other words, the plurality of buffer sleeves 70 are disposed, and are spaced from each other in the length direction of the secondary slide pin 52, and a larger contact span between the buffer sleeve 70 and the secondary slide pin accommodating hole 412 indicates better buffer effect.

Correspondingly, sections other than the positioning sections 521 of the secondary slide pin 52 are also spaced from each other in the length direction of the secondary slide pin 52, and larger contact span between the secondary slide pin 52 and the secondary slide pin accommodating hole 412 also improves the force condition when the secondary slide pin 52 collides with the secondary slide pin accommodating hole 412.

It should be noted that FIG. 16 merely describes examples of a possible quantity, positions, structural sizes, and the like of positioning sections 521 concavely disposed on the outer circumferential surface of the secondary slide pin 52, but the quantity, positions, structural sizes, and the like of the disposed positioning sections 521 are not limited hereto. In other embodiments of this application, the quantity of positioning sections 521 concavely disposed on the outer circumferential surface of the secondary slide pin 52 may be adjusted based on an actual design requirement and a specific application scenario of the electro-mechanical brake system 100. This is not specifically limited in embodiments of this application.

FIG. 17 is a diagram of an outline structure of the buffer sleeve 70 in the electro-mechanical brake system 100 according to embodiments of this application. In an embodiment, the outer circumferential surface of the buffer sleeve 70 is provided with a plurality of grooves 71, the plurality of grooves 71 are spaced from each other in a circumferential direction of the buffer sleeve 70, and the plurality of grooves 71 are configured to provide expansion space for the buffer sleeve 70 when the buffer sleeve 70 is squeezed.

It may be understood that the plurality of grooves 71 are distributed on the outer circumferential surface of the buffer sleeve 70 in the circumferential direction, so that when the buffer sleeve 70 collides with the secondary slide pin accommodating hole 412, deformation of the buffer sleeve 70 is accommodated by the grooves 71, to prevent the buffer sleeve 70 from cracking due to excessively high internal stress under large impact. In addition, deformation directions of the grooves 71 are along the circumferential direction of the buffer sleeve 70, and the deformation of the buffer sleeve 70 may increase a contact surface between the buffer sleeve 70 and the secondary slide pin accommodating hole 412, thereby helping the buffer sleeve 70 form better buffer effect.

In an embodiment, as shown in FIG. 17, in a radial direction of the buffer sleeve 70, a smallest diameter D1 of all the grooves 71 is greater than an inner diameter D2 of the buffer sleeve 70.

As shown in FIG. 17, the smallest diameter D1 of all the grooves 71 may be understood as that, in the plurality of grooves 71 arranged in the circumferential direction along the outer circumferential surface of the buffer sleeve 70, two grooves 71 symmetrically disposed about an axis of the buffer sleeve 70 have the smallest diameter D1. In other words, the smallest diameter D1 may be understood as a distance between two symmetric grooves 71 at positions closest to the axis of the buffer sleeve 70.

It may be understood that the smallest diameter D1 of all the grooves 71 is configured to be greater than the inner diameter D2 of the buffer sleeve 70, to control depths of the grooves 71, thereby preventing the outer circumferential surface of the buffer sleeve 70 from affecting overall structural rigidity of the buffer sleeve 70 due to construction of the grooves 71, and preventing the buffer sleeve 70 from cracking, to improve buffer effect of the buffer sleeve 70.

In an embodiment, as shown in FIG. 17, in an axial direction of the buffer sleeve 70, each groove 71 runs through the buffer sleeve 70.

It may be understood that each groove 71 is disposed to run through the buffer sleeve 70, to ensure that deformations of the buffer sleeve 70 at all positions tend to be consistent in the axial direction of the buffer sleeve 70, and to increase expansion space provided by each groove 71 for the buffer sleeve 70 when the buffer sleeve 70 is squeezed, to further improve the buffer effect of the buffer sleeve 70.

Refer to both FIG. 18 and FIG. 19. FIG. 18 is a diagram of an outline structure of the primary slide pin 51 in the electro-mechanical brake system 100 according to embodiments of this application. FIG. 19 is a diagram of a cross-sectional structure of the primary slide pin 51 in the electro-mechanical brake system 100 according to the embodiment shown in FIG. 18 of this application. In an embodiment, the primary slide pin 51 includes a plurality of air-eliminating grooves 511, the plurality of air-eliminating grooves 511 are spaced from each other in a circumferential direction of the primary slide pin 51, and each air-eliminating groove 511 extends in an axial direction of the primary slide pin 51 to enable an inside of the primary slide pin accommodating hole 411 to communicate with an outside.

As shown in FIG. 18 and FIG. 19, in the axial direction of the primary slide pin 51, a length L1 of the air-eliminating groove 511 is less than a length L2 of the primary slide pin 51.

It may be understood that the spacing between the primary slide pin 51 and the primary slide pin accommodating hole 411 is small, and a structure of the air-eliminating groove 511 can balance air pressure inside and outside the primary slide pin accommodating hole 411, to avoid forming large air pressure in the primary slide pin accommodating hole 411, which affects further sliding shift of the primary slide pin 51.

In an embodiment, refer back to FIG. 5. In the example shown in FIG. 5, the electro-mechanical brake apparatus includes a sealing sleeve 80. The sealing sleeve 80 is sleeved on the slide pin 50, and is located between the caliper body 40 and the caliper rack 30 in the length direction of the slide pin 50. The sealing sleeve 80 is fastened to the caliper body 40 and is configured to seal and protect the slide hole of the caliper body 40.

The sealing sleeve 80 is disposed on the caliper body 40 to shield an opening of the slide hole. When the slide pin 50 slides in the slide hole, the sealing sleeve 80 can cooperate with the slide pin 50 to maintain relative sealing in the slide hole, thereby forming protection effect for the inside of the slide hole.

It should be noted that, in some embodiments, the sealing sleeve 80 may also be disposed on the slide pin 50. Specifically, the sealing sleeve 80 is fastened to an end that is of the slide pin 50 and that is close to the caliper rack 30. The sealing sleeve 80 is configured to shield the slide hole on the caliper body 40, which can also provide protection. In some embodiments, two opposite ends of the sealing sleeve 80 are respectively fastened to the slide pin 50 and the caliper body 40, and the sealing sleeve 80 is scalable and deforms with sliding of the caliper body 40 relative to the slide pin 50. In this way, in the braking process of the electro-mechanical brake system 100, effect of sealing protection is also maintained for the sliding hole on the caliper body 40.

Refer to both FIG. 20 and FIG. 21. FIG. 20 is a diagram of an outline structure of the caliper body 40 in the electro-mechanical brake apparatus according to embodiments of this application. FIG. 21 is a cross-sectional diagram of the electro-mechanical brake apparatus in which a part of the structure is hidden according to embodiments of this application. In an embodiment, the caliper body 40 includes an accommodating portion 42, a pushing portion 43, and a connection portion 44. In the length direction of the slide pin 50, the accommodating portion 42 and the pushing portion 43 are respectively arranged on two sides of two friction pads 10. The brake assembly 20 and one adjacent friction pad 10 are located on a side that is of the accommodating portion 42 and that is away from the pushing portion 43. The other friction pad 10 is fastened to the pushing portion 43.

In other words, in an embodiment, the caliper body 40 includes the accommodating portion 42, in an axial direction of the slide pin accommodating hole, the accommodating portion 42 is located between the reducer 22 and the friction pad 10. The avoidance hole 24 is disposed in the accommodating portion 42, and several transmission members are accommodated in the accommodating portion 42. The reducer 22 is in transmission connection to the several transmission members (accommodated in the accommodating portion 42) through one transmission member (passing through the avoidance hole 24). The several transmission members (accommodated in the accommodating portion 42) are configured to: be driven by the reducer 22, and push a friction pad 10 to slide in a direction away from the reducer 22, to brake the wheel 1001.

The caliper body 40 fastens the reducer 22 by using the accommodating portion 42, and accommodates the several transmission members by using the accommodating portion 42, so that the reducer 22 is in transmission connection to the several transmission members, and drive the friction pad 10 to slide toward the brake disc 1002.

In an embodiment, the caliper body 40 includes the pushing portion 43. The pushing portion 43 is located on a side that is of the friction pad 10 and that is away from the reducer 22 in the axial direction of the slide pin accommodating hole. The caliper body 40 is configured to: be driven by the reducer 22 and slide relative to the vehicle frame. The pushing portion 43 drives the friction pad 10 to slide toward the reducer 22 to brake the wheel 1001. The caliper body 40 fastens the friction pad 10 through the pushing portion 43. In a process in which the pushing portion 43 slides with the caliper body 40, the pushing portion 43 pushes the friction pad 10 to slide toward the side of the reducer 22 to brake the wheel 1001.

In an embodiment, a distance between the accommodating portion 42 and the pushing portion 43 is greater than a sum of thicknesses of the two friction pads 10 and the thickness of the brake disc 1002.

In an embodiment, in the direction perpendicular to the length direction of the slide pin 50, the connection portion 44 is located on a same side of the accommodating portion 42 and the pushing portion 43, and the connection portion 44 is fastened to the accommodating portion 42 and the pushing portion 43.

It may be understood that two parts of the caliper body 40 are arranged on two sides of the brake disc 1002 and bridged and fastened, and one part (that is, the accommodating portion 42) of the caliper body 40 is configured to accommodate and support the brake assembly 20 and one friction pad 10. The other part (that is, the pushing portion 43) is configured to fasten the other friction pad 10, and the two friction pads 10 approach each other under actions of pushing force and counter pushing force of the brake assembly 20, to brake the brake disc 1002.

FIG. 22 is a diagram of an arrangement of an internal structure of the electro-mechanical brake apparatus according to embodiments of this application. In an embodiment, the brake assembly 20 further includes a brake motor 23. In the length direction of the slide pin 50, the reducer 22 is fastened on a side that is of the caliper body 40 and that is away from the brake disc 1002, and the reversing mechanism 21 is accommodated in the caliper body 40 and is in transmission connection to the reducer 22. The brake motor 23 is in transmission connection to the reducer 22 to provide brake force for braking the wheel 1001. In the axial direction of the slide pin accommodating hole, the brake motor 23 is located between the reducer 22 and the friction pad 10. In the radial direction of the slide pin accommodating hole, the brake motor 23 is adjacently arranged with the several transmission members accommodated in the accommodating portion 42.

As shown in FIG. 22, the reducer 22 is in transmission connection between the brake motor 23 and the reversing mechanism 21, and in the length direction of the slide pin 50, the reducer 22 is located on a side that is of the reversing mechanism 21 and that is away from the brake disc 1002. The brake motor 23 rotates by using the reducer 22 to drive the reversing mechanism 21 to act and brake the wheel 1001, which may also be understood as braking the brake disc 1002.

Specifically, in the length direction of the slide pin 50, the brake motor 23 and the reversing mechanism 21 are located on a same side of the reducer 22, that is, the brake motor 23 is located on a side that is of the reducer 22 and that faces the reversing mechanism 21, and in the length direction of the slide pin 50, the brake motor 23 and the reversing mechanism 21 are disposed adjacently, so that the reversing mechanism 21 is driven by the reducer 22 to form a shift in the length direction of the slide pin 50, and push the friction pad 10 to slide toward the brake disc 1002 to brake the wheel 1001.

As shown in FIG. 22, the reducer 22 includes an input shaft 221 and an output shaft 222 that are in transmission connection, the input shaft 221 is coaxially driven with a motor shaft 231 of the brake motor 23, and the output shaft 222 is coaxially driven with the reversing mechanism 21. The reducer 22 and the reversing mechanism 21 are disposed to be adjacently arranged and in transmission connection, to shorten a power transmission path from the brake motor 23 to the reversing mechanism 21, improve transmission efficiency, and reduce a volume.

In an embodiment, in the direction perpendicular to the length direction of the slide pin 50, the input shaft 221 and the output shaft 222 are disposed side by side, and the axial directions of the input shaft 221 and the output shaft 222 are both parallel to the length direction of the slide pin 50.

It may be understood that the input shaft 221 and the output shaft 222 in the reducer 22 are disposed to be arranged side by side and are in transmission connection, so that reversing transfer of output power of the brake motor 23 can be implemented, and then a length of the electro-mechanical brake apparatus can be shortened. In other words, the reducer 22 is arranged in an arrangement direction of the brake motor 23 and the reversing mechanism 21, and is arranged adjacent to both the brake motor 23 and the reversing mechanism 21, to further shorten the power transmission path from the brake motor 23 to the reversing mechanism 21, improve the transmission efficiency, and reduce the volume.

The motor shaft 231 rotates around the axis of the motor shaft 231, so that the brake motor 23, as a power source, outputs power to the outside. The motor shaft 231 of the brake motor 23 and the input shaft 221 of the reducer 22 are coaxially driven, and the motor shaft 231 rotates to synchronously drive the input shaft 221 to rotate, for achieving effect of inputting power into the reducer 22. Power output by the brake motor 23 is input to the reducer 22 through the input shaft 221, and is output from the reducer 22 through the output shaft 222.

The output shaft 222 and the reversing mechanism 21 are coaxially driven. When the output shaft 222 rotates, the reversing mechanism 21 is synchronously driven to rotate, so that the reversing mechanism 21 transmits power to a friction pad 10 adjacent to the reversing mechanism 21 to drive the friction pad 10 to slide toward the brake disc 1002, and drive the caliper body 40 to drive the other friction pad 10 to slide toward the brake disc 1002, thereby braking the vehicle 1000.

In other words, the transmission path of the power output by the brake motor 23 in the electro-mechanical brake apparatus may be but is not limited to: the motor shaft 231 of the brake motor 23→the input shaft 221→the output shaft 222→the reversing mechanism 21→the friction pad 10. This can further brake the vehicle 1000.

It may be understood that the power output by the brake motor 23 is transmitted to the reversing mechanism 21 through the reducer 22, and the reversing mechanism 21 drives the two friction pads 10 to slide to brake the brake disc 1002, so that the power output by the brake motor 23 is transmitted to the friction pads 10 through a "U"-shaped line. In other words, the power transmission path of the electro-mechanical brake apparatus forms folding effect in an axial direction of the wheel 1001, thereby downsizing the electro-mechanical brake apparatus in the axial direction of the wheel 1001, and properly utilizing the wheel end space of the vehicle 1000.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An electro-mechanical brake apparatus with a biased caliper body, wherein the electro-mechanical brake apparatus comprises the caliper body, a reducer, and a friction pad, the caliper body is configured to connect a caliper rack and the reducer, the reducer is configured to drive, through a plurality of transmission members, the friction pad to shift, the caliper body comprises an avoidance hole and two slide pin accommodating holes, the avoidance hole is configured to avoid one of the transmission members between the reducer and the friction pad, and the two slide pin accommodating holes are separately configured to accommodate one slide pin of the caliper rack, wherein
in an axial direction of the slide pin accommodating hole, the reducer and the friction pad are oppositely arranged, an extension direction of the slide pin accommodating hole faces the reducer, and an opening direction of the slide pin accommodating is away from the reducer.

2. The electro-mechanical brake apparatus according to claim 1, wherein the caliper body comprises two connection holes, the two connection holes are configured to fasten the reducer, and a direction in which the two connection holes are oppositely arranged intersects that for the two slide pin accommodating holes, wherein
in a radial direction of the slide pin accommodating hole, the two connection holes are respectively arranged on two sides of the avoidance hole, and the two slide pin accommodating holes are respectively arranged on two sides of the avoidance hole; and
in the axial direction of the slide pin accommodating hole, opening directions of the two connection holes face the reducer.

3. The electro-mechanical brake apparatus according to claim 2, wherein the direction in which the two connection holes are oppositely arranged is perpendicular to that for the two slide pin accommodating holes; or
distances between an axis of the avoidance hole and axes of the two slide pin accommodating holes are equal.

4. The electro-mechanical brake apparatus according to claim 1, wherein the caliper body comprises an accommodating portion, the accommodating portion is located between the reducer and the friction pad in the axial direction of the slide pin accommodating hole, the avoidance hole is disposed in the accommodating portion, several transmission members are accommodated in the accommodating portion, the reducer is in transmission connection to the several transmission members through the one of the transmission members, and the several transmission members are configured to be driven by the reducer, and push the friction pad to slide in a direction away from the reducer to brake a wheel.

5. The electro-mechanical brake apparatus according to claim 4, wherein the electro-mechanical brake apparatus comprises a brake motor, and the brake motor is in transmission connection to the reducer to provide brake force for braking the wheel, wherein
in the axial direction of the slide pin accommodating hole, the brake motor is located between the reducer and the friction pad; and
in a radial direction of the slide pin accommodating hole, the brake motor and the several transmission members are adjacently arranged.

6. The electro-mechanical brake apparatus according to claim 1, wherein the caliper body comprises a pushing portion; in the axial direction of the slide pin accommodating hole, the pushing portion is located on a side that is of the friction pad and that is away from the reducer; the caliper body is configured to: be driven by the reducer and slide relative to the vehicle frame; and the pushing portion drives the friction pad to slide toward the reducer to brake the wheel.

7. An electro-mechanical brake system, wherein the electro-mechanical brake system comprises a caliper rack, a slide pin, and the electro-mechanical brake apparatus according to any one of claims 1 to 6, the caliper rack is fastened to a vehicle frame, one end of the slide pin is fastened to the caliper rack, and the other end extends into a slide pin accommodating hole of a caliper body in the electro-mechanical brake apparatus.

8. The electro-mechanical brake system according to claim 7, wherein the electro-mechanical brake system comprises a fastening bolt, the caliper rack comprises a mounting ear, the fastening bolt and the slide pin are respectively arranged on two sides of the mounting ear in an axial direction of the slide pin, and the fastening bolt passes through the mounting ear and is fastened to an end portion of the slide pin.

9. The electro-mechanical brake system according to claim 7 or 8, wherein the slide pin comprises a primary slide pin and a secondary slide pin, and the caliper body comprises a primary slide pin accommodating hole and a secondary slide pin accommodating hole, wherein
in a radial direction of the primary slide pin, a first spacing exists between the primary slide pin and the primary slide pin accommodating hole; and
in a radial direction of the secondary slide pin, a second spacing exists between the secondary slide pin and the secondary slide pin accommodating hole, and the second spacing is greater than the first spacing.

10. The electro-mechanical brake system according to claim 9, wherein the electro-mechanical brake system comprises a buffer sleeve, and the buffer sleeve is sleeved on the secondary slide pin and inserted into the secondary slide pin accommodating hole, wherein
an outer circumferential surface of the buffer sleeve is attached to an inner circumferential surface of the secondary slide pin accommodating hole; or
in the radial direction of the secondary slide pin, a third spacing exists between the buffer sleeve and the secondary slide pin accommodating hole, and the third spacing is smaller than the first spacing.

11. The electro-mechanical brake system according to claim 10, wherein at least one positioning section is concavely disposed on an outer circumferential surface of the secondary slide pin, a periphery of each positioning section is sleeved with one buffer sleeve, and in the radial direction of the secondary slide pin, a sum of a thickness of the buffer sleeve and a radius of the positioning section is greater than a radius of the outer circumferential surface of the secondary slide pin.

12. The electro-mechanical brake system according to claim 10, wherein the outer circumferential surface of the buffer sleeve is provided with a plurality of grooves, the plurality of grooves are spaced from each other in a circumferential direction of the buffer sleeve, and the plurality of grooves are configured to provide expansion space for the buffer sleeve when the buffer sleeve is squeezed, wherein
in a radial direction of the buffer sleeve, a smallest diameter of all the grooves is greater than an inner diameter of the buffer sleeve; and
in an axial direction of the buffer sleeve, each groove runs through the buffer sleeve.

13. The electro-mechanical brake system according to claim 9, wherein the primary slide pin comprises a plurality of air-eliminating grooves, the plurality of air-eliminating grooves are spaced from each other in a circumferential direction of the primary slide pin, and each air-eliminating groove extends in an axial direction of the primary slide pin for an inside of the primary slide pin accommodating hole to communicate with an outside, wherein
in the axial direction of the primary slide pin, a length of the air-eliminating groove is less than a length of the primary slide pin.

14. The electro-mechanical brake system according to claim 7, wherein the electro-mechanical brake apparatus comprises a sealing sleeve, the sealing sleeve is sleeved on the slide pin, and is located between the caliper body and the caliper rack in a length direction of the slide pin, and the sealing sleeve is fastened to the caliper body and is configured to seal and protect the slide pin accommodating hole of the caliper body.

15. A vehicle, comprising a wheel and the electro-mechanical brake system according to any one of claims 7 to 14, wherein a length direction of a slide pin in the electro-mechanical brake system is parallel to a rotation axis direction of a brake disc of the wheel.
